# EUROPEAN PATENT APPLICATION

(11) **EP 4 057 664 A1**
(43) Date of publication of application: **14.09.2022**
(21) Application number: 19951396.1
(22) Date of filing: 07.11.2019
(51) Int. Cl.: H04W 16/14, H04W 72/04, H04W 72/08

(54) **TERMINAL**

(71) Applicant: NTT DOCOMO, INC., Chiyoda-Ku Tokyo 100-6150 (JP)
(72) Inventor: KURITA Daisuke, Tokyo 100-6150 (JP); HARADA Hiroki, Tokyo 100-6150 (JP); KUMAGAI Shinya, Tokyo 100-6150 (JP)
(74) Representative: Hoffmann Eitle
(86) International application number: PCT/JP2019/043758
(87) International publication number: WO 2021/090454

(57) **Abstract**

When a second frequency band different from a first frequency band allocated for mobile communication is used, a UE (200) measures a radio signal based on an RSSI measurement window applied to the second frequency band. The RSSI measurement window is configured using a confirmation band for confirming the presence or absence of use in the second frequency band as reference.

## Description

### Technical Field

The present invention relates to a terminal that performs radio communication, and more particularly, to a terminal that uses an unlicensed frequency band.

### Background Art

The 3rd Generation Partnership Project (3GPP) specifies Long Term Evolution (LTE) and specifies LTE-Advanced (hereinafter referred to as LTE including LTE-Advanced) and 5th generation mobile communication system (called 5G, New Radio (NR), or Next Generation (NG)) for the purpose of further increasing the speed of LTE.

For example, even in NR, as in LTE, New Radio-Unlicensed (NR-U), which extends an available frequency band by using a spectrum of an unlicensed frequency band, is being discussed (Non Patent Literature 1).

Even in NR-U, a radio base station (gNB) performs carrier sense before transmission of radio signals starts in an unlicensed frequency band, and only when it is confirmed that no channel is being used by another neighboring system, a Listen-Before-Talk (LBT) mechanism that enables transmission within a certain time length is applied.

Specifically, as with Licensed-Assisted Access (LAA) of LTE, in order to address a so-called "hidden terminal" problem, which is difficult to discover from radio base stations (gNB), it has been discussed that a terminal (User Equipment, UE) measures a Received Signal Strength Indicator (RSSI) that is the received power of the entire certain band within the unlicensed frequency band (Non Patent Literature 2).

The RSSI measurement for NR is discussed as Cross Link Interference (CLI) in 3GPP (Non Patent Literature 3). The CLI specifies the RSSI measurement for mutual interference measurement mainly for reducing mutual interference, which allows the size and position of the RSSI measurement window (frequency direction and time direction) to be specified.

Also, it is agreed that the RSSI measurement timing configuration (RMTC) of NR-U is determined based on parameters in the time direction and the frequency direction (Non Patent Literature 4).

### Citation List

### Non Patent Literature

Non Patent Literature 1: 3GPP TR 38.889 V16.0.0, 3rd Generation Partnership Project; Technical Specification Group Radio Access Network; Study on NR-based access to unlicensed spectrum (Release 16), 3GPP, December 2018
Non Patent Literature 2: "Feature lead summary #2 of Enhancements to initial access procedure", R1-1903221, 3GPP TSG RAN WG1 Meeting #96, 3GPP, March 2019
Non Patent Literature 3: "LS on RRC parameters for NR CLI-handling", R1-1903836, 3GPP TSG RAN WG1 Meeting #98BIS, 3GPP, October 2019
Non Patent Literature 4: "Feature lead summary 3 of Enhancements to initial access procedure", R1-1911685, 3GPP TSG RAN WG1 Meeting #96, 3GPP, March 2019

### Summary of Invention

However, the contents of agreement of the RMTC described above do not consider the bandwidth of the LBT band (LBT sub-band) in the NR-U and the measurement for each band. Therefore, there is room for improvement in efficient RSSI measurement of NR-U.

Therefore, the present invention has been made in view of such circumstances, and an object of the present invention is to provide a terminal capable of realizing more efficient measurement of a radio signal in an NR-U using an unlicensed frequency band.

According to one aspect of the present disclosure, a terminal (UE 200) includes: a receiving unit (radio signal transceiving unit 210) configured to receive a radio signal; and a control unit (control unit 270) configured to, when a second frequency band (unlicensed frequency band Fu) different from a first frequency band allocated for mobile communication is used, measure the radio signal based on a measurement window (RSSI measurement window) applied to the second frequency band, wherein the measurement window is configured using a confirmation band (LBT sub-band) for confirming the presence or absence of use in the second frequency band as reference.

### Brief Description of Drawings

Fig. 1 is an overall schematic configuration diagram of a radio communication system 10.
Fig. 2 is a diagram illustrating a frequency range used in the radio communication system 10.
Fig. 3 is a diagram illustrating a configuration example of a radio frame, a subframe, and a slot used in the radio communication system 10.
Fig. 4 is a functional block configuration diagram of a UE 200.
Fig. 5 is a diagram illustrating a configuration example of an RSSI measurement window in accordance with a CLI-RSSI measurement regulation of NR.
Fig. 6 is a diagram illustrating a configuration example of an RSSI measurement window according to an LBT sub-band of NR-U.
Fig. 7 is a diagram illustrating an example of an initial access sequence using NR-U including RSSI measurement by a UE 200.
Fig. 8 is a diagram illustrating a configuration example (No. 1) of MeasObjectNR used for notification of an RSSI measurement window in NR-U.
Fig. 9 is a diagram illustrating a configuration example (No. 2) of MeasObjectNR used for notification of an RSSI measurement window in NR-U.
Fig. 10 is a diagram illustrating an example of a hardware configuration of the UE 200.

### Description of Embodiments

Hereinafter, embodiments will be described with reference to the drawings. It should be noted that the same functions or configurations are denoted by the same or similar reference numerals, and a description thereof will be omitted as appropriate.

### (1) Overall Schematic Configuration of Radio Communication System

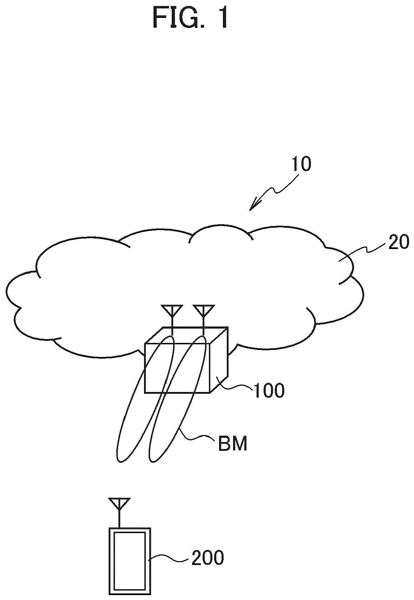

Fig. 1 is an overall schematic configuration diagram of a radio communication system 10 according to the present embodiment. The radio communication system 10 is a radio communication system in accordance with 5G New Radio (NR) and includes a Next Generation-Radio Access Network 20 (hereinafter, NG-RAN 20) and a terminal 200 (hereinafter, UE 200).

The NG-RAN 20 includes a radio base station 100 (hereinafter, gNB 100). It should not be noted that a specific configuration of the radio communication system 10, including the number of gNBs and the number of UEs, is not limited to the example illustrated in Fig. 1.

The NG-RAN 20 actually includes a plurality of NG-RAN nodes, specifically gNBs (or ng-eNBs), and is connected to a core network (5GC, not illustrated) in accordance with 5G. It should be noted that the NG-RAN 20 and the 5GC may be simply expressed as "network".

The gNB 100 is a 5G-compliant radio base station and performs 5G-compliant radio communication with the UE 200. The gNB 100 and 110 and the UE 200 can correspond to massive Multiple-Input Multiple-Output (MIMO) that generates beams BM with higher directivity by controlling radio signals transmitted from a plurality of antenna elements, Carrier Aggregation (CA) using a plurality of Component Carriers (CC), Dual Connectivity (DC) that simultaneously performs communication between the UE and each of two NG-RAN nodes, and the like.

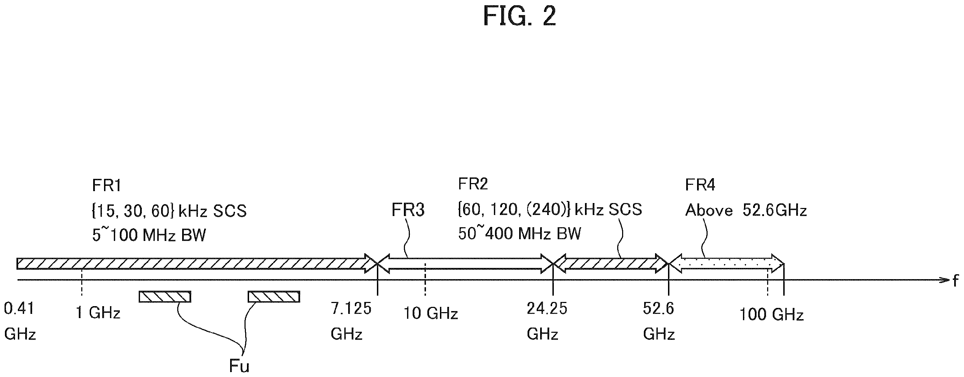

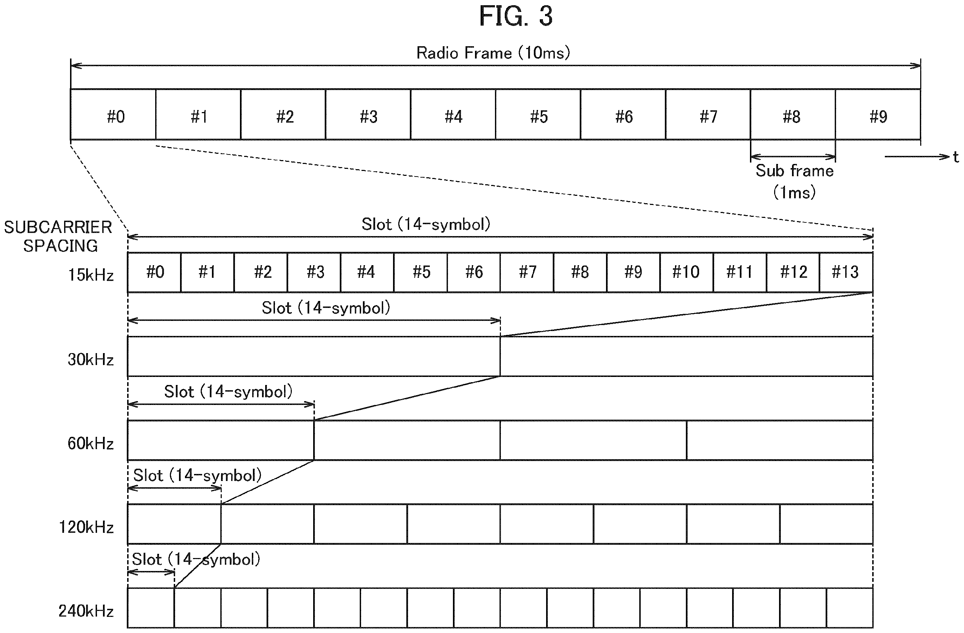

The radio communication system 10 supports a plurality of frequency ranges (FR). Fig. 2 is a diagram illustrating the frequency range used in the radio communication system 10. Also, Fig. 3 is a diagram illustrating a configuration example of a radio frame, a subframe, and a slot used in the radio communication system 10.

As illustrated in Fig. 2, the radio communication system 10 supports FR1 and FR2. The frequency band of each FR is as follows.
- FR1:410 MHz to 7.125 GHz
- FR2:24.25 GHz to 52.6 GHz

In FR1, a Sub-Carrier Spacing (SCS) of 15, 30, or 60 kHz is used and a bandwidth of 5-100 MHz (BW) is used. FR2 has a higher frequency than FR1. An SCS of 60 or 120 kHz (240 kHz may be included) is used, and a bandwidth (BW) of 50 to 400 MHz is used.

It should be noted that the SCS may be interpreted as numerology. The numerology is defined in 3GPP TS 38.300 and supports one subcarrier spacing in the frequency domain.

Furthermore, the radio communication system 10 may correspond to a higher frequency band than the FR2 frequency band. For example, the radio communication system 10 may support a frequency band of above 52.6 GHz and up to 114.25 GHz. Here, such a high frequency band is called "FR4" for convenience. FR4 belongs to so-called EHF (extremely high frequency, also called millimeter wave). It should be noted that FR4 is a tentative name and may be called with another name.

Also, FR4 may be further divided. For example, FR4 may be divided into a frequency range of 70 GHz or lower and a frequency range of 70 GHz or higher. Alternatively, FR4 may be divided into more frequency ranges, or may be divided into frequencies other than 70 GHz.

Also, here, the frequency band between FR2 and FR41 is called "FR3" for convenience. FR3 is a frequency band of above 7.125 GHz and below 24.25 GHz.

In the present embodiment, FR3 and FR4 are different from the frequency band including FR1 and FR2 and are called different frequency bands.

Also, in the radio communication system 10, in addition to the frequency band (first frequency band) allocated for the radio communication system 10, an unlicensed frequency band Fu (second frequency band) different from the frequency band is also used. Specifically, the radio communication system 10 can perform New Radio-Unlicensed (NR-U) for extending the usable frequency band by using the spectrum of the unlicensed frequency band.

The frequency band assigned for the radio communication system 10 is a frequency band included in the frequency ranges of FR1 and FR2 described above and based on license assignment by the government.

The unlicensed frequency band Fu is a frequency band that does not need to be licensed by the government and can be used without being limited to a specific telecommunications carrier. For example, there is a frequency band for wireless LAN (WLAN) (2.4 GHz or 5 GHz band, or the like).

In the unlicensed frequency band Fu, it is possible to install radio stations without being limited to specific telecommunications carriers, but it is not desirable that signals from nearby radio stations interfere with each other to significantly deteriorate communication performance.

Therefore, for example, in Japan, as the requirements for the radio system using the unlicensed frequency band Fu (for example, 5 GHz band), the gNB 100 performs carrier sense before transmission starts. Only when it is confirmed that no channel is being used by other nearby systems, a Listen-Before-Talk (LBT) mechanism that enables transmission within a certain time length is applied. It should be noted that carrier sense is a technique for confirming whether a frequency carrier is used for other communication before radio waves are emitted.

In the case of the NR-U, in order to address a so-called "hidden terminal" problem, which is difficult to discover from radio base stations (gNB), the UE 200 can measure a received signal strength indicator (RSSI) that is the received power of the entire band within the unlicensed frequency band Fu, for example, the LBT sub-band.

When the gNB 100 performs the carrier sense and confirms that no channel is being used by other nearby systems, a reference signal for radio link monitoring, specifically, an RLM-RS (Radio link monitoring-Reference Signal) is transmitted toward a forming cell.

The RLM-RS may include DRS (Discovery Reference Signal), SSB (SS/PBCH blocks: Synchronization Signal/Physical Broadcast Channel blocks), and CSI-RS (Channel State Information-RS). Also, the DRS may include CSI-RS, RMSI-CORSET (remaining minimum system information-control resource sets), or PDSCH (Physical Downlink Shared Channel) associated with the SSB.

The RMSI-CORSET is CORESET for Type0-PDCCH CSS (Common Search Space) set, and the UE 200 determines several continuous resource blocks (RBs) and symbols for RMSI CORSET, and configures a monitoring occasion (MO) of a PDCCH (Physical Downlink Control Channel), specifically, a Type 0 PDCCH for decoding a system information block (SIB) based on the determined RBs and symbols.

### (2) Functional Block Configuration of Radio Communication System

Next, the functional block configuration of the radio communication system 10 will be described. Specifically, the functional block configuration of the UE 200 will be described.

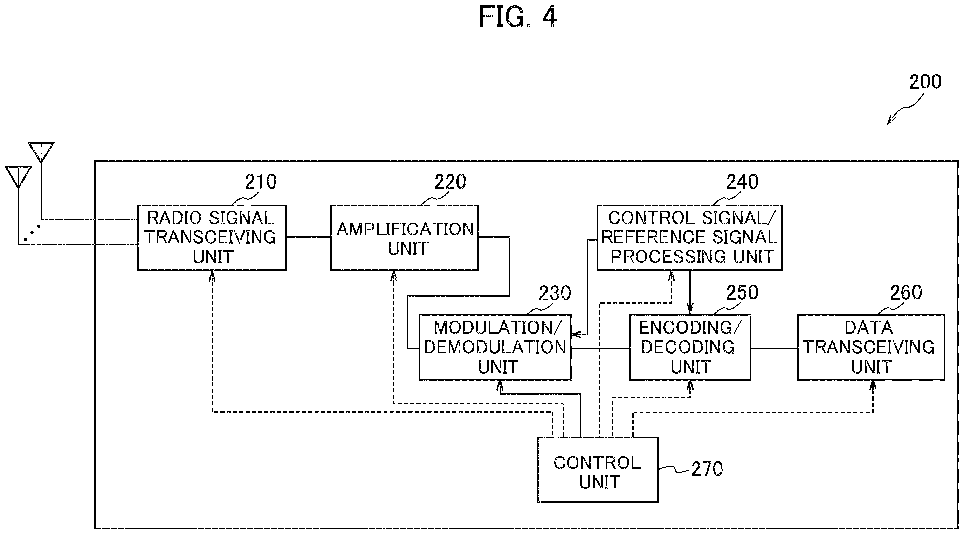

Fig. 4 is a functional block configuration diagram of a UE 200. As illustrated in Fig. 4, the UE 200 includes a radio signal transceiving unit 210, an amplification unit 220, a modulation/demodulation unit 230, a control signal/reference signal processing unit 240, an encoding/decoding unit 250, a data transceiving unit 260, and a control unit 270.

The radio signal transceiving unit 210 transmits/receives a radio signal in accordance with NR. The radio signal transceiving unit 210 corresponds to Massive MIMO, CA used by bundling a plurality of CCs, DC performing simultaneous communication between the UE and each of the two NG-RAN nodes, and the like. In the present embodiment, the radio signal transceiving unit 210 constitutes a receiving unit that receives a radio signal.

The amplification unit 220 includes a PA (Power Amplifier)/LNA (Low Noise Amplifier) or the like. The amplification unit 220 amplifies a signal output from the modulation/demodulation unit 230 to a certain power level. Also, the amplification unit 220 amplifies an RF signal output from the radio signal transceiving unit 210.

The modulation/demodulation unit 230 performs data modulation/demodulation, transmission power setup, resource block allocation, and the like for each certain communication destination (gNB 100 or another gNB).

The control signal/reference signal processing unit 240 performs processing regarding various control signals transmitted and received by the UE 200 and processing regarding various reference signals transmitted and received by the UE 200.

Specifically, the control signal/reference signal processing unit 240 receives various control signals transmitted from the gNB 100 via a certain control channel, for example, control signals of a radio resource control layer (RRC). Also, the control signal/reference signal processing unit 240 transmits various control signals to the gNB 100 via a certain control channel.

The control signal/reference signal processing unit 240 performs processing using a reference signal (RS) such as a Demodulation Reference Signal (DMRS) and a Phase Tracking Reference Signal (PTRS).

The DMRS is a reference signal (pilot signal) known between a UE-specific base station and a UE for estimating a fading channel used for data demodulation. The PTRS is a UE-specific reference signal for the purpose of estimating phase noise, which is a problem in high frequency bands.

It should be noted that, in addition to the DMRS and the PTRS, the reference signal includes a Channel State Information-Reference Signal (CSI-RS) and a Sounding Reference Signal (SRS). Furthermore, the reference signal also includes the RLM-RS, as described above.

Also, the channel includes a control channel and a data channel. The control channel includes a Physical Downlink Control Channel (PDCCH), a Physical Uplink Control Channel (PUCCH), a Physical Random Access Channel (PRACH), and a Physical Broadcast Channel (PBCH).

Also, the data channel includes a Physical Downlink Shared Channel (PDSCH) and a Physical Uplink Shared Channel (PUSCH). Also, the data may mean data transmitted via the data channel.

The control signal/reference signal processing unit 240 can receive band information indicating a band in which the radio signal is measured in the unlicensed frequency band Fu. In the present embodiment, the control signal/reference signal processing unit 240 constitutes an information receiving unit.

Also, the control signal/reference signal processing unit 240 can receive band information indicating the start position or center position of the measurement window applied to the unlicensed frequency band Fu. That is, the band information may include information indicating the bandwidth of the measurement window.

The start position and the center position of the measurement window may use a Physical Resource Block (PRB) as reference, as described below, or may directly indicate the frequency. Specifically, startPRB and centerPRB defined as NR Cross Link Interference (CLI) can be used. Alternatively, the measurement window may be specified by Absolute Radio-Frequency Channel Number (ARFCN), specifically, NR-ARFCN.

Also, the band information may specifically mean a band for LBT, that is, an LBT sub-band (20 MHz), but is not necessarily limited to the LBT sub-band. For example, it is sufficient that a so-called "hidden terminal" can be found in the band within the unlicensed frequency band Fu and the UE 200 can measure it. However, it may be assumed that the band to be measured, such as the LBT sub-band, is narrower than the band of the RSSI measurement window defined as NR Cross Link Interference (CLI).

The encoding/decoding unit 250 performs data division/concatenation, channel coding/decoding, and the like for each certain communication destination (gNB 100 or another gNB).

Specifically, the encoding/decoding unit 250 divides data output from the data transceiving unit 260 into a certain size and performs channel coding on the divided data. Also, the encoding/decoding unit 250 decodes data output from the modulation/demodulation unit 230 and concatenates the decoded data.

The data transceiving unit 260 performs transmission/reception of Protocol Data Unit (PDU) and Service Data Unit (SDU). Specifically, the data transceiving unit 260 performs assembly/disassembly of PDUs/SDUs on a plurality of layers (medium access control layer (MAC), radio link control layer (RLC), packet data convergence protocol layer (PDCP), or the like). Also, the data transceiving unit 260 performs data error correction and retransmission control based on hybrid ARQ (Hybrid automatic repeat request).

The control unit 270 controls each functional block constituting the UE 200. In particular, in the present embodiment, the control unit 270 performs the control associated with the NR-U.

Specifically, when performing NR-U using the unlicensed frequency band Fu (which may be called second frequency band or unlicensed band) different from the frequency band (first frequency band) allocated for mobile communication, that is, the licensed frequency band (which may be called licensed band), the control unit 270 can measure the radio signal based on the measurement window applied to the unlicensed frequency band Fu.

More specifically, the control unit 270 measures the RSSI of the entire unlicensed frequency band Fu based on the RSSI measurement window applied to the unlicensed frequency band Fu for a certain band in the unlicensed frequency band Fu.

It should be noted that the control unit 270 may measure a value based on another index indicating the received power of the entire band, not necessarily the RSSI of the band. Also, as described above, the band typically means the LBT sub-band (20 MHz) unit, but may be a plurality of LBT sub-bands, or a half band of the LBT sub-band.

The LBT sub-band is a band used for LBT, and may be expressed as a confirmation band for confirming the presence or absence of use in the unlicensed frequency band Fu. That is, the LBT sub-band may be interpreted as a band used to perform carrier sense before starting the transmission of the radio signal in the unlicensed frequency band Fu and confirm whether the channel is being used by another neighboring system.

In the present embodiment, the measurement window is configured using the confirmation band for confirming the presence or absence of use in the unlicensed frequency band Fu, that is, the LBT sub-band as reference. It should be noted that the configuration using the LBT sub-band as reference may be the entire LBT sub-band (20 MHz), 10 MHz which is 1/2 of LBT sub-band, or 5 MHz which is 1/4 of the LBT sub-band

The control unit 270 may measure the radio signal based on the start position (or center position) of the radio resource corresponding to the measurement window.

Specifically, the control unit 270 can determine the position of the RSSI measurement window in the NR-U based on the starting index of the Physical Resource Block (PRB) corresponding to the measurement target band included in the RRC message (which may be called Starting PRB index (startPRB)), or the index that is the center of the PRB corresponding to the band (which may be called centerPRB).

The control unit 270 can determine the measurement window based on the band information received by the control signal/reference signal processing unit 240. Specifically, based on the band information received by the control signal/reference signal processing unit 240, the control unit 270 can determine the RSSI measurement window based on the band (LBT sub-band) within the unlicensed frequency band Fu.

### (3) Operation of Radio Communication System

Next, the operation of the radio communication system 10 will be described. Specifically, in the NR-U, the operation of measuring the RSSI in the band within the unlicensed frequency band Fu will be described.

### (3.1) Prerequisite Operation

In order to deal with the "hidden terminal" problem (detection of hidden terminals) when the NR-U is performed, 3GPP has agreed to support the RSSI measurement function similar to Licensed-Assisted Access (LAA) of LTE (Release 13) and channel occupancy reporting.

Also, the RSSI measurement for the NR is discussed as Cross Link Interference (CLI) in 3GPP and summarized as parameters of the RRC layer (see, for example, Non Patent Literature 3 described above).

For example, the starting PRB index (startPRB: Starting PRB index) of the bandwidth to be the RSSI measurement target is defined as follows.
- When the Reference SCS is smaller than the SCS of the active downlink (DL) BWP (Bandwidth part), the network configures startPRB and nrofPRB as the multiple of a value obtained by dividing the active BW SCS by the Reference SCS.

Also, the nrofPRB indicating the allowable size of the band to be measured is defined as follows.
- It is the number of PRBs corresponding to the width of the relevant CLI-RSSI measurement resource, and only a multiple of 4 is allowed. The minimum number that can be configured is the width of 4 PRBs and active DL BWPs. When the configured value is larger than the width of the active DL BWP, the UE 200 assumes that the bandwidth of the actual CLI-RSSI measurement resource is within the active DL BWP.

### (3.2) Operation in NR-U

In the case of the NR-U, the following problems occur according to the above-described CLI-RSSI measurement regulations. Specifically, in the case of the NR-U, it is assumed that the LBT sub-band that is the band for LBT is 20 MHz, and a plurality of LBT sub-bands that have succeeded in LBT are bundled and used. Therefore, according to the CLI-RSSI measurement regulation, since the RSSI measurement for each LBT sub-band is preferable, the number of RSSI measurement windows to be measured may be insufficient.

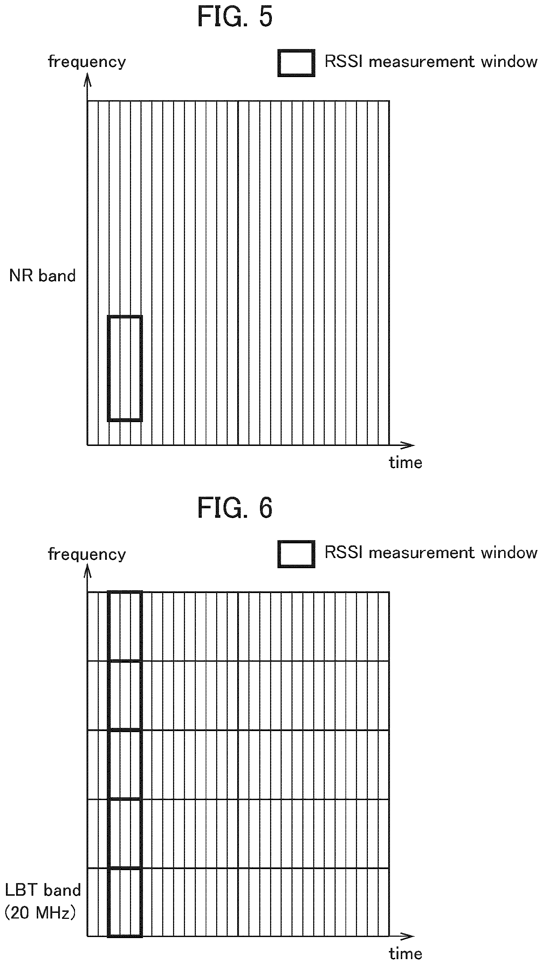

Fig. 5 illustrates a configuration example of the RSSI measurement window in accordance with the CLI-RSSI measurement regulation of the NR. On the other hand, Fig. 6 illustrates a configuration example of the RSSI measurement window according to the LBT sub-band of the NR-U.

As illustrated in Figs. 5 and 6, when comparing the RSSI measurement window according to the NR CLI-RSSI measurement specifications with the RSSI measurement window according to the NR-U LBT sub-band, the numbers of both windows do not match.

Specifically, while there is one RSSI measurement window according to the CLI-RSSI measurement regulation, there are a plurality of RSSI measurement windows according to the LBT sub-band.

That is, it is not appropriate to apply the method of configuring the RSSI measurement window according to the CLI-RSSI measurement specification to the RSSI measurement window in the NR-U.

Therefore, in this operation example, in the case of the NR-U, the terminal measures the RSSI for each LBT sub-band, as illustrated in Fig. 6.

That is, in this operation example, the RSSI measurement window can be configured in units of LBT sub-bands. It should be noted that, as described above, the size of the RSSI measurement window may include a plurality of LBT sub-bands, and may include up to five LBT sub-bands considering the NR regulation and the unlicensed frequency band Fu.

Also, the RSSI measurement window may be configured for each LBT sub-band, and up to five LBT sub-band startPRB (or centerPRB) values and the plurality of RSSI measurement windows associated therewith may be configured.

Further, regarding the NR-U RSSI measurement, it is preferable to define the item for performing the RSSI measurement for each LBT sub-band, considering that the following contents can be included.
- (Time direction)
- Periodicity
- Duration
- Offset duration of RMTC measurement
- (Frequency direction)
- Bandwidth
- Frequency

### (3.3) Operation Example

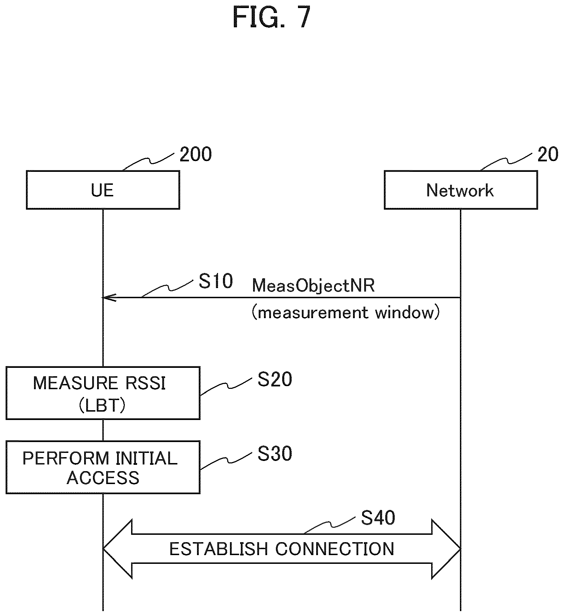

Fig. 7 illustrates an example of an initial access sequence using an NR-U including RSSI measurement by a UE 200. As illustrated in Fig. 7, the UE 200 receives a message including an RSSI measurement window in an NR-U from a network prior to an initial access to the network (S10).

In the operation example illustrated in Fig. 7, the UE 200 receives an RRC message including an information element "MeasObjectNR". For example, MeasObjectNR can be included in MeasConfig, and MeasConfig can be included in RRCReconfiguration transmitted from the network to the UE 200.

The UE 200 measures the RSSI in the corresponding LBT sub-band based on the acquired RSSI measurement window information (LBT sub-band information) (S20).

Specifically, the UE 200 measures the received power of the LBT sub-band in the unlicensed frequency band Fu based on the acquired RSSI measurement window information. As described above, the size of the RSSI measurement window may be the entire LBT sub-band (20 MHz), 1/2 (10 MHz) of the LTB sub-band, or 1/4 (5 MHz) of the LBT sub-band.

Based on the LBT result, the UE 200 determines that the communication (NR-U) using the LBT sub-band of the unlicensed frequency band Fu is possible, and performs the initial access (S30).

Specifically, the UE 200 performs the measurement of SSB (SS/PBCH Block) including synchronization signal (SS: Synchronization Signal) and downlink physical broadcast channel (PBCH: Physical Broadcast CHannel), and a random access (RA) procedure using PRACH (Physical Random Access Channel) occasion (PRACH Occasion (RO)).

When the initial access is completed, the UE 200 and the network establish a connection (including an RRC connection) (S40).

### (3.4) Notification Example of RSSI Measurement Window

Next, the notification example of the RSSI measurement window in the NR-U will be described. As described above, the measurement window can be notified to the UE 200 from the network using, for example, an information element such as MeasObjectNR, but the notification contents may include the following contents.
(I) Start or center frequency: a plurality (up to five) of values of startPRB (start frequency) or centerPRB (center frequency) are specified.

It should be noted that, as described above, the measurement window may be specified by using NR-ARFCN.
(ii) Measurement Bandwidth
   - In case in which the measurement bandwidth is variable: The measurement bandwidth is specified using each start/center frequency as reference.
   - In case in which the measurement bandwidth is the specified value (fixed): It is not necessary to specify the measurement bandwidth.
(Iii) In case in which each start/center frequency and measurement bandwidth are the specified values: The LBT sub-band to be measured is notified by a bitmap.

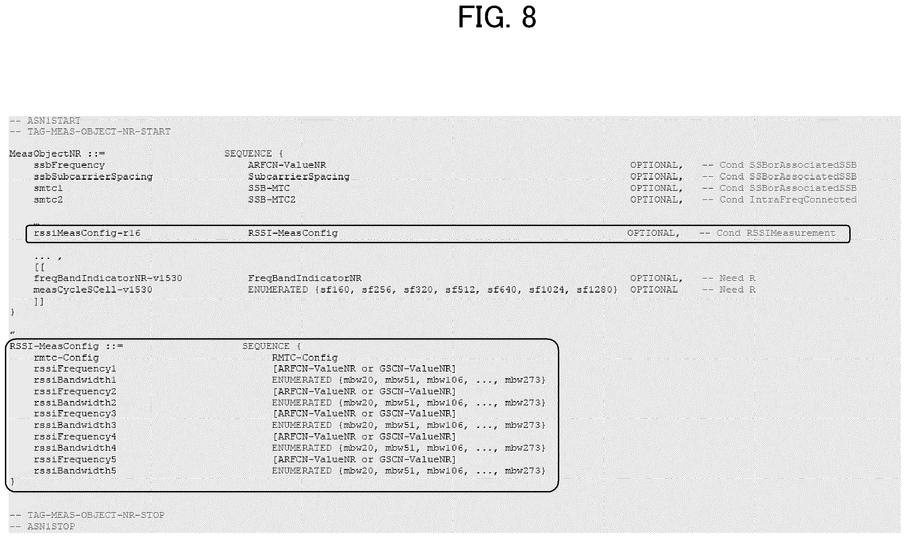

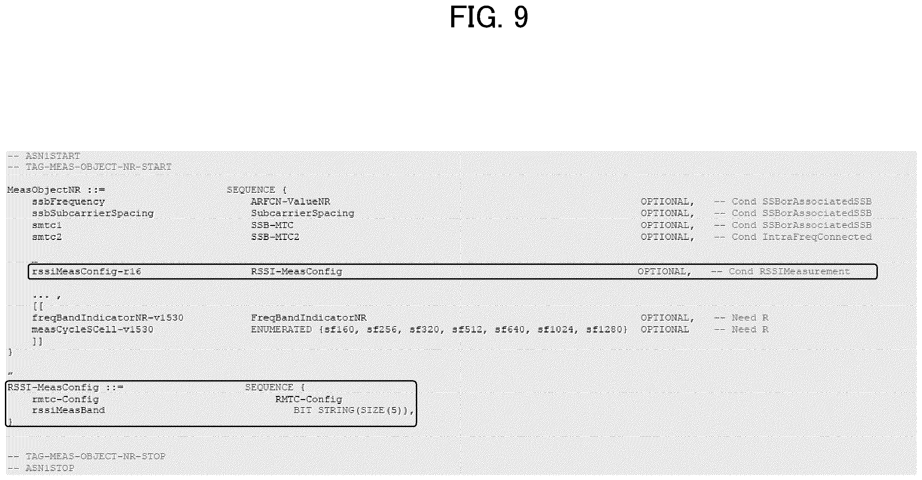

Figs. 8 and 9 illustrates configuration examples of MeasObjectNR used for the notification of the RSSI measurement window in the NR-U.

Specifically, Fig. 8 illustrates an example of configuring the start/center frequency and the bandwidth. On the other hand, Fig. 9 illustrates an example in which the center frequency and the bandwidth are the specified values (fixed) and the LBT sub-band to be measured is configured.

As illustrated in Fig. 8, when the start/center frequency and the bandwidth are respectively configured, rssiFrequency1 to 5 and rssiBandwidth1 to 5 are specified as rssiMeasConfig.

On the other hand, as illustrated in Fig. 9, when the LBT sub-band to be measured is directly configured, rssiMeasBand (corresponding to LBT sub-band) is specified by a bitmap (bit string) as rssiMeasConfig.

### (4) Operation and Effect

According to the above-described embodiment, the following effects can be obtained. Specifically, when performing NR-U using the unlicensed frequency band Fu (which may be called second frequency band or unlicensed band) different from the frequency band (first frequency band) allocated for mobile communication, that is, the licensed frequency band, the control unit 270 can measure the radio signal based on the measurement window applied to the unlicensed frequency band Fu.

Specifically, the UE 200 can measure the RSSI of the band (LBT sub-band) in the unlicensed frequency band Fu based on the RSSI measurement window applied to the unlicensed frequency band Fu. More specifically, the UE 200 assumes that the RSSI measurement window is configured using the LBT sub-band, which is the confirmation band for confirming the presence or absence of use in the unlicensed frequency band Fu, as reference.

Therefore, since the size of the RSSI measurement window according to the LBT sub-band of the NR-U can be applied, efficient radio signal measurement, specifically RSSI measurement, can be realized even in the case of the NR-U using the unlicensed frequency band Fu. As a result, an efficient LBT can be realized.

In the present embodiment, the UE 200 can receive the information element (MeasObjectNR) including the band information indicating the start position or the center position of the RSSI measurement window, and can determine the RSSI measurement window based on the received band information. Therefore, the UE 200 can easily and reliably identify the position of the RSSI measurement window.

In the present embodiment, the band information can include information indicating the bandwidth of the RSSI measurement window, or can include information indicating the LBT sub-band to be measured. Therefore, it is possible to realize efficient notification of the RSSI measurement window to the UE 200 according to the configuration of the RSSI measurement window.

### (5) Other Embodiments

Although the contents of the present invention have been described with reference to the embodiments, the present invention is not limited to these descriptions, and it will be obvious to those skilled in the art that various modifications and improvements can be made thereto.

For example, in the above-described embodiment, an example in which MeasObjectNR is used for the notification of the RSSI measurement window in the NR-U has been described, but an information element other than MeasObjectNR may be used. The information element may be notified by upper layer signaling such as RRC, or may be lower layer signaling such as MAC-CE. Alternatively, system information such as System Information Block (SIB) may be used.

Also, the unlicensed frequency band may be called by a different name. For example, the terms such as License-exempt or Licensed-Assisted Access (LAA) may be used.

Further, as described above, the RSSI may be called by another name as long as it means the received power of the entire band within the unlicensed frequency band Fu. Similarly, the measurement windows may be called by another name such as a measurement range and a measurement section.

Also, the block configuration diagram (Fig. 4) used to describe the above-described embodiment illustrates blocks of functional units. Those functional blocks (structural components) can be realized by a desired combination of at least one of hardware and software. A method for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. For example, a functional block (structural component) that causes transmitting may be called a transmitting unit or a transmitter. For any of the above, as explained above, the realization method is not particularly limited to any one method.

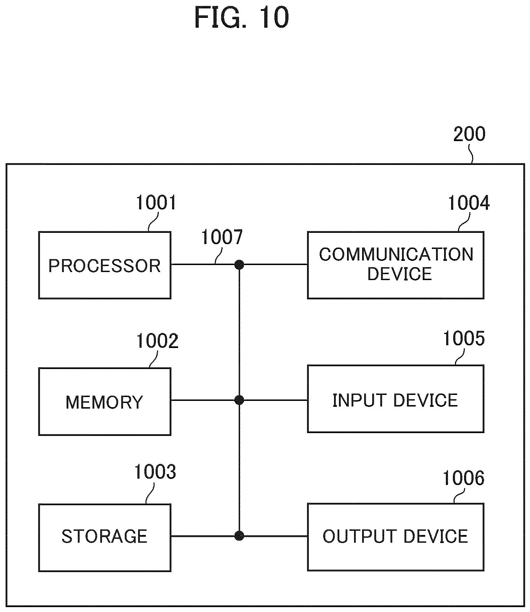

Furthermore, the UE 200 described above can function as a computer that performs the processing of the radio communication method of the present disclosure. Fig. 10 illustrates an example of a hardware configuration of the UE 200. As illustrated in Fig. 10, the UE 200 can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices illustrated in the figure, or can be constituted by without including a part of the devices.

The functional blocks of the UE 200 (see Fig. 4) can be realized by any of hardware elements of the computer device or a combination of the hardware elements.

Moreover, the processor 1001 performs computing by loading a predetermined software (computer program) on hardware such as the processor 1001 and the memory 1002, and realizes various functions of the device by controlling communication via the communication device 1004, and controlling reading and/or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (computer program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main storage device), and the like. The memory 1002 can store therein a computer program (computer program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD) .

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information thereamong. The bus 1007 may be configured by using a single bus or may be configured by using different buses for each device.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, broadcasting information (Master Information Block (MIB), System Information Block (SIB)), other signals, or a combination of these. The RRC signaling may be called RRC message, for example, or can be RRC Connection Setup message, RRC Connection Reconfiguration message, or the like.

Each aspect/embodiment described in the present disclosure may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems using other appropriate systems, and next-generation systems extended based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information and signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, computer program code, computer program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling). Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by those skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). Note that at least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

The radio frame may include one or more frames in the time domain. Each of one or more frames in the time domain may be called a subframe.

The subframe may also include one or more slots in the time domain. The subframe may have a fixed time length (for example, 1 ms) that does not depend on numerology.

The numerology may be a communication parameter applied to transmission and/or reception of a certain signal or channel. The numerology may indicate, for example, at least one of subcarrier spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols (Orthogonal Frequency Division Multiplexing (OFDM) symbols, Single Carrier Frequency Division Multiple Access (SC-FDMA) symbols or the like) in the time domain. The slot may be the time unit based on the numerology.

The slot may include a plurality of minislots. Each minislot may include one or more symbols in the time domain. The minislot may also be called as a subslot. The minislot may include fewer symbols than the slot. The PDSCH (or PUSCH) transmitted in the time unit larger than the minislot may be called PDSCH (or PUSCH) mapping type A. The PDSCH (or PUSCH) transmitted by using the minislot may be called PDSCH (or PUSCH) mapping type B.

The radio frame, the subframe, the slot, the minislot, and the symbol all represent the time unit for signal transmission. The radio frame, the subframe, the slot, the minislot, and the symbol may have different names corresponding thereto.

For example, one subframe may be called the transmission time interval (TTI), the plurality of consecutive subframes may be called the TTI, and one slot or one minislot may be called the TTI. That is, at least one of the subframe and the TTI may be a subframe (1 ms) in the existing LTE, may be shorter than 1 ms (for example, 1-13 symbols), and may be longer than 1 ms. It should be noted that the unit indicating the TTI may be called the slot, the minislot, or the like, instead of the subframe.

Here, the TTI refers to, for example, the minimum time unit of scheduling in the radio communication. For example, in the LTE system, the base station performs scheduling for allocating radio resources (frequency band width usable in each UE, transmission power, or the like) to each UE in the units of TTI. The definition of the TTI is not limited thereto.

The TTI may be a transmission time unit of a channel-encoded data packet (transport block), a code block, a codeword, or the like, or may be a processing unit such as scheduling or link adaptation. It should be noted that, when the TTI is given, the time interval (for example, the number of symbols) in which the transport block, code block, codeword, or the like are actually mapped may be shorter than that of the TTI.

It should be noted that, when one slot or one minislot is called the TTI, one or more TTIs (that is, one or more slots or one or more minislots) may be the minimum time unit of scheduling. Also, the number of slots (number of minislots) that constitutes the minimum time unit of the scheduling may be controlled.

The TTI having a time length of 1 ms may be called normal TTI (TTI in LTE Rel. 8-12), normal TTI, long TTI, normal subframe, normal subframe, long subframe, slot, or the like. The TTI that is shorter than the normal TTI may be called shortened TTI, short TTI, partial TTI (or fractional TTI), shortened subframe, short subframe, minislot, subslot, slot, or the like.

It should be noted that long TTI (for example, normal TTI, subframe, or the like) may be replaced with a TTI having a time length exceeding 1 ms, and the short TTI (for example, shortened TTI) may be read as a TTI having a TTI length that is less than the long TTI length and greater than or equal to 1 ms.

The resource block (RB) is a resource allocation unit in the time domain and the frequency domain, and may include one or more consecutive subcarriers in the frequency domain. The number of subcarriers included in the RB may be the same regardless of the numerology and may be, for example, 12. The number of subcarriers included in the RB may be determined based on the numerology.

Also, the time domain of the RB may include one or more symbols and may have a length of one slot, one minislot, one subframe, or one TTI. One TTI, one subframe, or the like may include one or more resource blocks.

It should be noted that one or more RBs may be called a physical resource block (Physical RB: PRB), a subcarrier group (Sub-Carrier Group: SCG), a resource element group (Resource Element Group: REG), a PRB pair, an RB pair, or the like.

Also, the resource block may include one or more resource elements (Resource Element: RE) . For example, one RE may be a radio resource area of one subcarrier and one symbol.

The bandwidth part (BWP) (which may also be referred to as partial bandwidth) may indicate a subset of continuous common RBs (common resource blocks) for a certain numerology in a certain carrier. Here, the common RB may be specified by the index of the RB based on the common reference point of the carrier. The PRB may be defined in the BWP and may be numbered in the BWP.

The BWP may include a BWP for UL (UL BWP) and a BWP for DL (DL BWP). One or more BWPs may be configured in one carrier for the UE.

At least one of the configured BWPs may be active, and the UE may not expect to transmit or receive certain signals/channels outside the active BWP. It should be noted that "cell", "carrier", or the like in the present disclosure may be read as "BWP".

The structures of the radio frame, the subframe, the slot, the minislot, the symbol, and the like described above are merely examples. For example, the configurations such as the number of subframes included in the radio frame, the number of slots per subframe or radio frame, the number of minislots included in the slot, the number of symbols and RBs included in the slot or minislot, the number of subcarriers included in the RB, and the number of symbols in the TTI, the symbol length, and the cyclic prefix (CP) length can be variously changed.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the radio frequency domain, the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each device may be replaced with "unit", "circuit", "device", and the like.

Any reference to an element using a designation such as "first", "second", and the like used in the present specification generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present specification or the claims is intended not to be an exclusive disjunction.

Throughout this disclosure, for example, during translation, if articles such as "a", "an", and "the" in English are added, in this disclosure, these articles shall include plurality of nouns following these articles.

The term "deciding" and "determining" as used in the present disclosure may encompass various operations. The "deciding" and the "determining" may include, for example, "deciding" or "determining" of judging, calculating, computing, processing, deriving, investigating, looking up, search, inquiry (for example, searching in a table, a database, or another data structure), ascertaining, and the like. Also, the "deciding" and the "determining" may include "deciding" and "determining" of receiving (for example, receiving information), transmitting (for example, transmitting information), input, output, accessing (for example, access to data in the memory), and the like. Also, the "deciding" and the "determining" may include "deciding" and "determining" of resolving, selecting, choosing, establishing, comparing, and the like. That is, the "deciding" and the "determining" may include "deciding" and "determining" of operations. Also, the "deciding (determining)" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

- 10: Radio communication system
- 20: NG-RAN
- 100: gNB
- 200: UE
- 210: Radio signal transceiving unit
- 220: Amplification unit
- 230: Modulation/demodulation unit
- 240: Control signal/reference signal processing unit
- 250: Encoding/decoding unit
- 260: Data transceiving unit
- 270: Control unit
- 1001: Processor
- 1002: Memory
- 1003: Storage
- 1004: Communication device
- 1005: Input device
- 1006: Output device
- 1007: Bus

## Claims

1. A terminal comprising:
a receiving unit configured to receive a radio signal; and
a control unit configured to, when a second frequency band different from a first frequency band allocated for mobile communication is used, measure the radio signal based on a measurement window applied to the second frequency band,
wherein the measurement window is configured using a confirmation band for confirming presence or absence of use in the second frequency band as reference.

2. The terminal according to claim 1, comprising
an information receiving unit configured to receive band information indicating a start position or a center position of the measurement window,
wherein the control unit is configured to determine the measurement window based on the band information.

3. The terminal according to claim 2, wherein the band information includes information indicating a bandwidth of the measurement window.

4. The terminal according to claim 2, wherein the band information includes information indicating the confirmation band to be measured.
